# EUROPEAN PATENT APPLICATION

(11) **EP 4 614 660 A1**
(43) Date of publication of application: **10.09.2025**
(21) Application number: 23903849.0
(22) Date of filing: 01.12.2023
(51) Int. Cl.: H01M 10/42, H01M 50/519, H01M 50/186, H01M 50/178, H01M 10/052

(54) **BATTERY STRUCTURE AND ELECTRONIC DEVICE COMPRISING BATTERY STRUCTURE**

(30) Priority: 14.12.2022 KR 20220174738; 09.01.2023 KR 20230002844
(71) Applicant: Samsung Electronics Co., Ltd., Suwon-si, Gyeonggi-do 16677 (KR)
(72) Inventor: JEON, Yongsub, Suwon-si, Gyeonggi-do 16677 (KR); HUR, Juneyoung, Suwon-si, Gyeonggi-do 16677 (KR); KIM, Sunjin, Suwon-si, Gyeonggi-do 16677 (KR); SHIN, Yongjun, Suwon-si, Gyeonggi-do 16677 (KR); YANG, Seohoon, Suwon-si, Gyeonggi-do 16677 (KR); LEE, Seongil, Suwon-si, Gyeonggi-do 16677 (KR)
(74) Representative: Gulde & Partner
(86) International application number: PCT/KR2023/019660
(87) International publication number: WO 2024/128646

(57) **Abstract**

An electronic device according to an embodiment of the present disclosure may comprise: a battery cell; a battery pouch for sealing the battery cell, the battery pouch including a reception part in which the battery cell is disposed and a first sealing part bent to face the battery cell and including at least one groove; an electrode terminal including a first electrode tab connected to a positive plate of the battery cell to be drawn out through the first sealing part and a second electrode tab connected to a negative plate of the battery cell to be drawn out through the first sealing part; and a protection circuit module which includes at least one electronic device, is disposed at the first sealing part in such a manner that the electrode device is positioned at the groove of the first sealing part, and is connected to the electrode terminal.

## Description

### [Technical Field]

Various embodiments disclosed herein relate to a battery structure and an electronic device including the same.

### [Background Art]

As the demand for portable electronic devices increases, the demand for batteries supplying power to electronic devices is also increasing. In keeping with this growing demand, technology in the battery field has also been steadily advancing.

Meanwhile, as the demand for miniaturization, slimming, and/or weight reduction of electronic devices increases, the disposition space for electronic elements is being reduced. For example, the disposition space for batteries within electronic devices is being reduced.

### [Disclosure of Invention]

### [Technical Problem]

As electronic devices become miniaturized and slimmed down, the space occupied by a battery structure within an electronic device may be designed to be limited. In particular, electronic devices worn on a portion of a user's body, such as wearable electronic devices, may have size constraints to consider user comfort. As a result, the space occupied by a battery structure within a wearable electronic device may be reduced. Meanwhile, when implementing a battery structure in a limited space, the size of the battery cell may be limited. In this case, the capacity of the battery structure may be limited. As a result, consumer usage time for electronic devices may decrease.

According to an embodiment of the disclosure, the space occupied by a protection circuit module within the space allocated to a battery structure in an electronic device may be reduced. In this case, the size of the battery cell may be increased by the reduced space to ensure the capacity of the battery cell.

### [Solution to Problem]

According to an embodiment of the disclosure, an electronic device may include a battery cell, a battery pouch sealing the battery cell, the battery pouch including an accommodation portion in which the battery cell is disposed and a first sealing portion that is bent to face the battery cell and includes at least one groove, an electrode terminal including a first electrode tab connected to a positive electrode plate of the battery cell and drawn out to the first sealing portion and a second electrode tab connected to a negative electrode plate of the battery cell and drawn out to the first sealing portion, and a protection circuit module including at least one electronic element and disposed on the first sealing portion, such that the electronic element is positioned in the groove of the first sealing portion, the protection circuit module being connected to the electrode terminal.

According to an embodiment of the disclosure, a battery structure may include a battery cell, a battery pouch sealing the battery cell, the battery pouch including an accommodation portion in which the battery cell is disposed and a first sealing portion that is bent to face the accommodation portion and includes at least one groove, an electrode terminal including a first electrode tab connected to a positive electrode plate of the battery cell and drawn out to the first sealing portion and a second electrode tab connected to a negative electrode plate of the battery cell and drawn out to the first sealing portion, and a protection circuit module including at least one electronic element and disposed on the first sealing portion such that the electronic element is positioned in the groove of the first sealing portion, the protection circuit module being connected to the electrode terminal.

### [Advantageous Effects of Invention]

According to an embodiment of the disclosure, a space between components constituting the battery structure may be reduced. In this case, the size of the battery cell may be increased by the reduced space between the components to ensure the capacity of the battery cell. For example, in the battery structure, the space occupied by the protection circuit module

(PCM) of the battery structure may be reduced, and the size of the battery cell may be increased by the reduced space.

### [Brief Description of Drawings]

In connection with the description of the drawings, the same or similar components may be denoted by the same or similar reference numerals.
FIG. 1 is a block diagram of an electronic device according to an embodiment of the disclosure in a network environment.
FIG. 2 is a block diagram illustrating a power management module and a battery according to an embodiment of the disclosure.
FIG. 3 is a view illustrating a battery structure in a state before being bent at a first sealing portion according to an embodiment of the disclosure.
FIG. 4A is a view illustrating a battery structure in a state in which a bent shape is formed at the first sealing portion according to an embodiment of the disclosure.
FIG. 4B is an enlarged view illustrating the first sealing portion of FIG. 4A.
FIG. 4C is a rear perspective view illustrating the battery structure of FIG. 4A.
FIG. 5A is a front view illustrating a state in which the first sealing portion of FIG. 4A is folded to face the accommodation portion of the battery pouch.
FIG. 5B is an enlarged view illustrating the first sealing portion of FIG. 5A.
FIG. 6A is a perspective view illustrating a state in which a protection circuit module is disposed on the first sealing portion of the battery pouch.
FIG. 6B is a front view illustrating a state in which the protection circuit module is disposed on the first sealing portion of the battery pouch.
FIG. 7 is a view for comparing and describing the battery structure of the disclosure with a battery structure according to another embodiment.

### [Mode for the Invention]

Hereinafter, various embodiments of the disclosure will be described with reference to the accompanying drawings. It shall be understood that various embodiments disclosed herein and terms for describing the embodiments are not intended to limit the technical features disclosed herein to specific embodiments, and that the embodiments include various modifications, equivalents, and/or substitutions of the corresponding embodiments.

In relation to the description of the drawings, similar reference numerals may be used for similar or related components. The singular form of a noun corresponding to an item may include one or more items unless the relevant context clearly indicates otherwise.

In this document, each of phrases such as "A or B," "at least one of A and B," "at least one of A or B," "A, B, or C," "at least one of A, B, and C," and "at least one of A, B, or C" may include one of the items listed together in the corresponding one of the phrases, or all possible combinations thereof. Terms such as "1^{st}," "2^{nd}," "first," and "second" may be used to simply distinguish a given component from other corresponding components and do not limit the corresponding components in other aspects (e.g., importance or order). When a certain (e.g., a first) component is mentioned as being "coupled" or "connected" to another (e.g., a second) component, with or without a term "functionally" or "communicatively," it means that the certain component may be connected to the other component directly (e.g., wiredly), wirelessly, or via a third component.

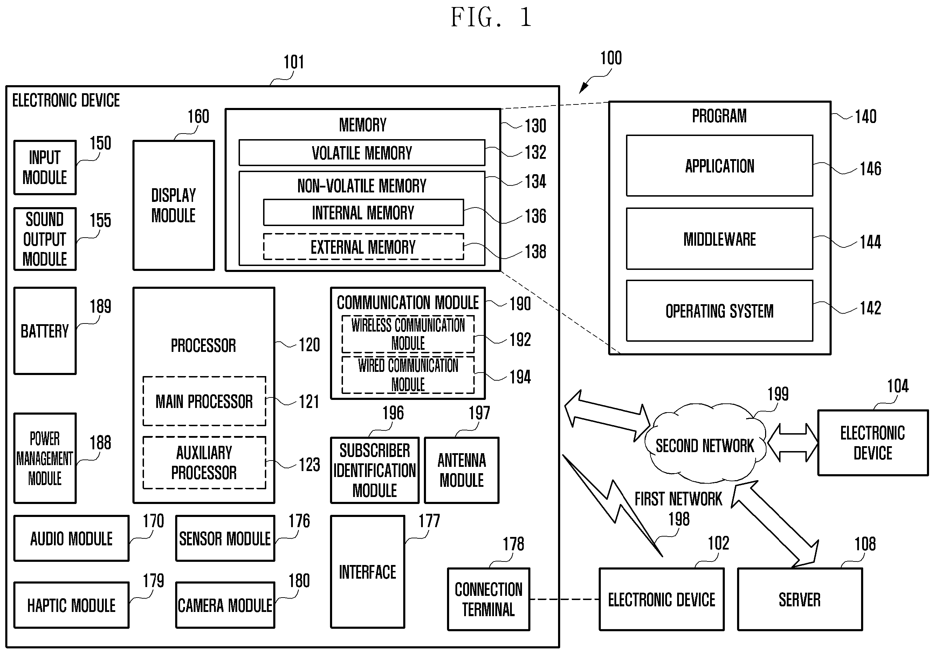

Fig. 1 is a block diagram illustrating an electronic device 101 in a network environment 100 according to various embodiments. Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197. According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

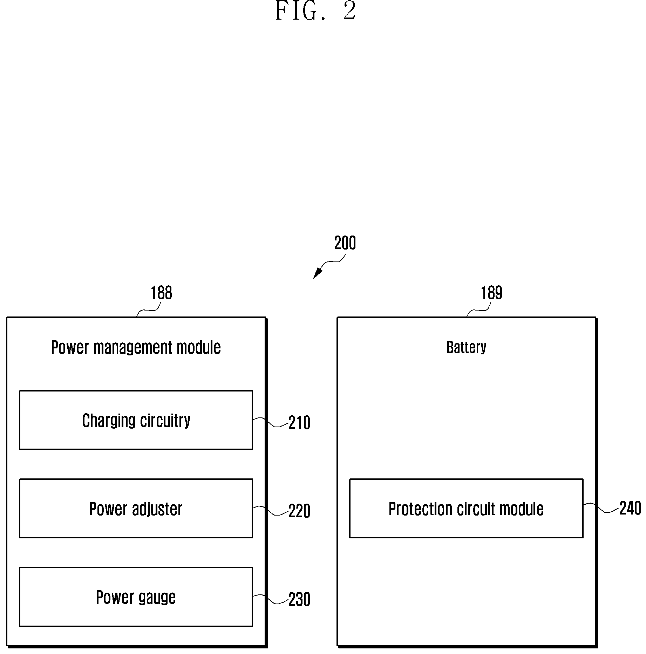

Fig. 2 is a block diagram 200 illustrating the power management module 188 and the battery 189 according to various embodiments. Referring to Fig. 2, the power management module 188 may include charging circuitry 210, a power adjuster 220, or a power gauge 230. The charging circuitry 210 may charge the battery 189 by using power supplied from an external power source outside the electronic device 101. According to an embodiment, the charging circuitry 210 may select a charging scheme (e.g., normal charging or quick charging) based at least in part on a type of the external power source (e.g., a power outlet, a USB, or wireless charging), magnitude of power suppliable from the external power source (e.g., about 20 Watt or more), or an attribute of the battery 189, and may charge the battery 189 using the selected charging scheme. The external power source may be connected with the electronic device 101, for example, directly via the connecting terminal 178 or wirelessly via the antenna module 197.

The power adjuster 220 may generate a plurality of powers having different voltage levels or different current levels by adjusting a voltage level or a current level of the power supplied from the external power source or the battery 189. The power adjuster 220 may adjust the voltage level or the current level of the power supplied from the external power source or the battery 189 into a different voltage level or current level appropriate for each of some of the components included in the electronic device 101. According to an embodiment, the power adjuster 220 may be implemented in the form of a low drop out (LDO) regulator or a switching regulator. The power gauge 230 may measure use state information about the battery 189 (e.g., a capacity, a number of times of charging or discharging, a voltage, or a temperature of the battery 189).

The power management module 188 may determine, using, for example, the charging circuitry 210, the power adjuster 220, or the power gauge 230, charging state information (e.g., lifetime, over voltage, low voltage, over current, over charge, over discharge, overheat, short, or swelling) related to the charging of the battery 189 based at least in part on the measured use state information about the battery 189. The power management module 188 may determine whether the state of the battery 189 is normal or abnormal based at least in part on the determined charging state information. If the state of the battery 189 is determined to abnormal, the power management module 188 may adjust the charging of the battery 189 (e.g., reduce the charging current or voltage, or stop the charging). According to an embodiment, at least some of the functions of the power management module 188 may be performed by an external control device (e.g., the processor 120).

The battery 189, according to an embodiment, may include a protection circuit module (PCM) 240. The PCM 240 may perform one or more of various functions (e.g., a pre-cutoff function) to prevent a performance deterioration of, or a damage to, the battery 189. The PCM 240, additionally or alternatively, may be configured as at least part of a battery management system (BMS) capable of performing various functions including cell balancing, measurement of battery capacity, count of a number of charging or discharging, measurement of temperature, or measurement of voltage.

According to an embodiment, at least part of the charging state information or use state information regarding the battery 189 may be measured using a corresponding sensor (e.g., a temperature sensor) of the sensor module 176, the power gauge 230, or the power management module 188.. According to an embodiment, the corresponding sensor (e.g., a temperature sensor) of the sensor module 176 may be included as part of the PCM 240, or may be disposed near the battery 189 as a separate device.

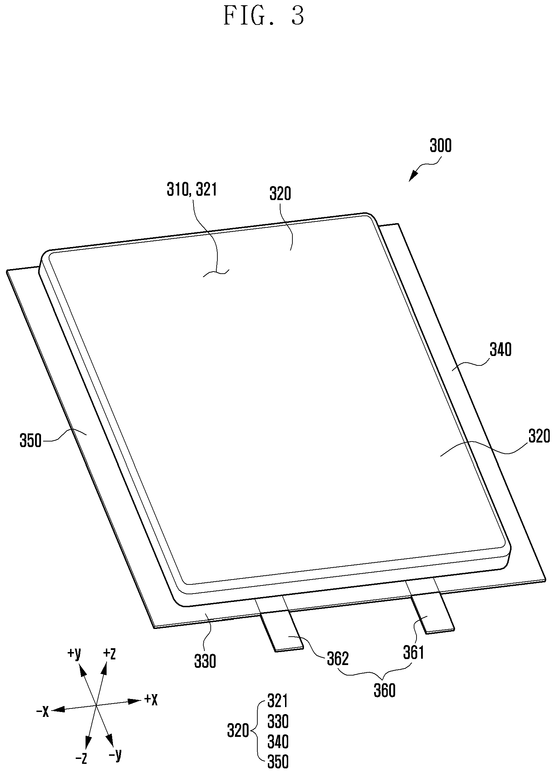

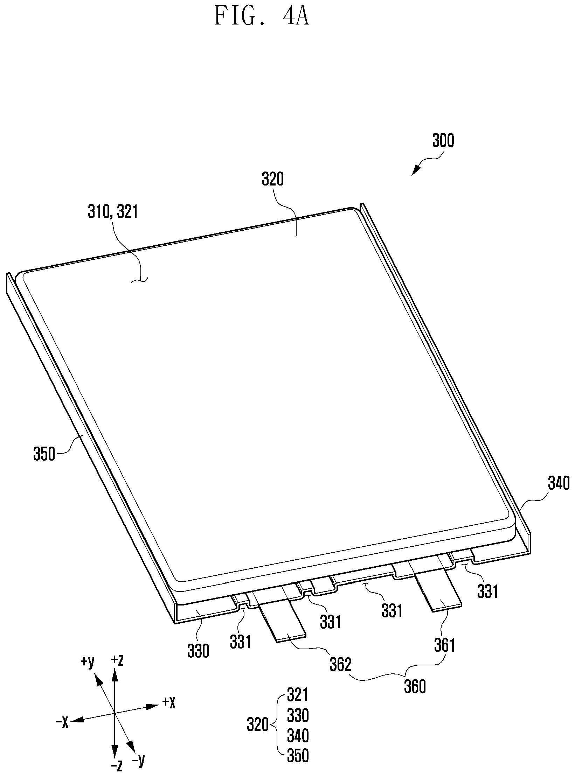

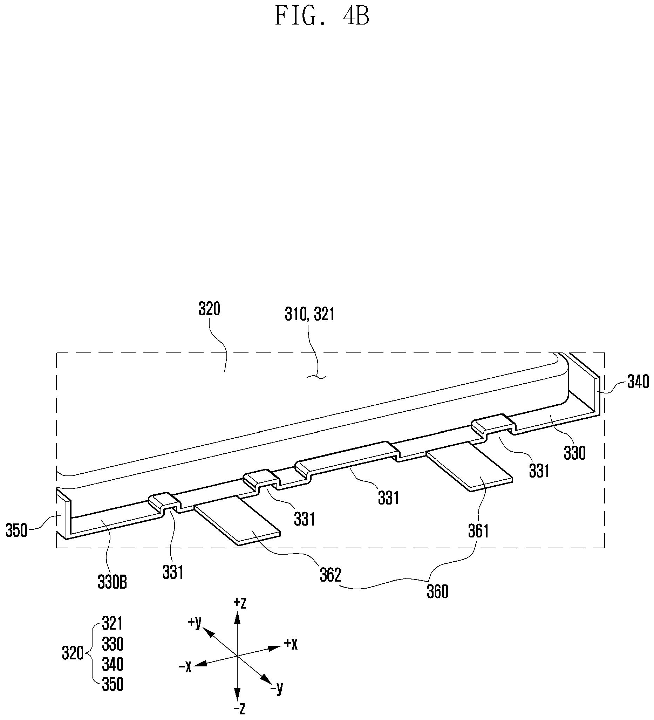

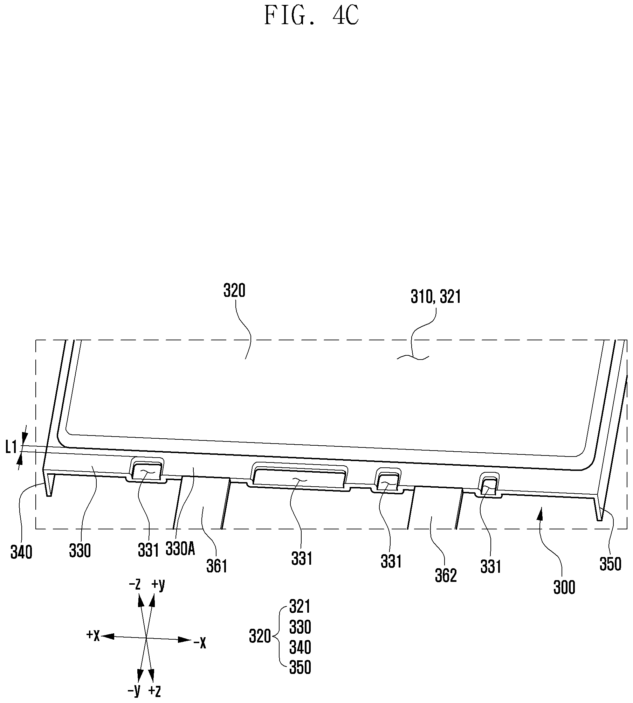

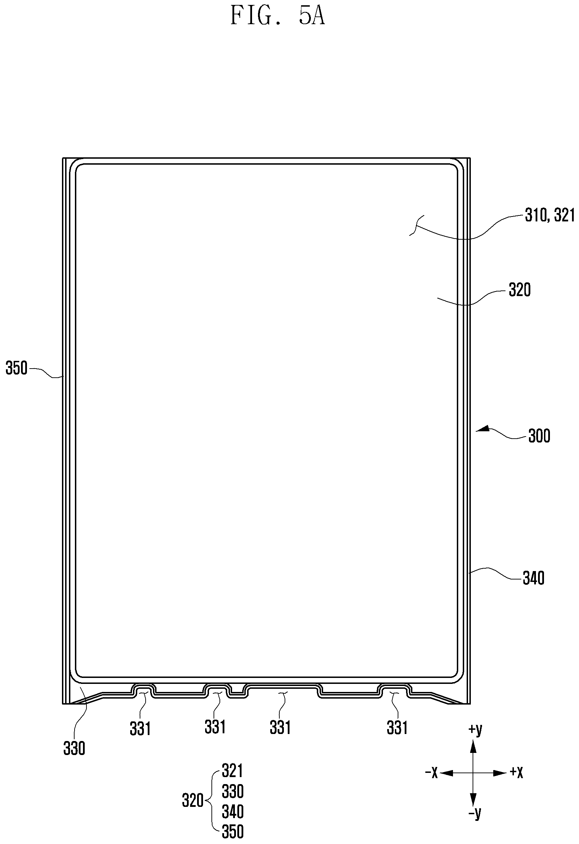

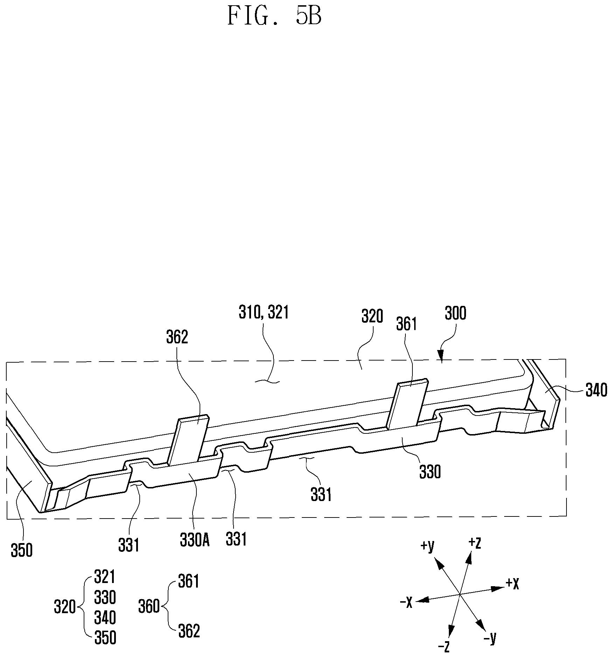

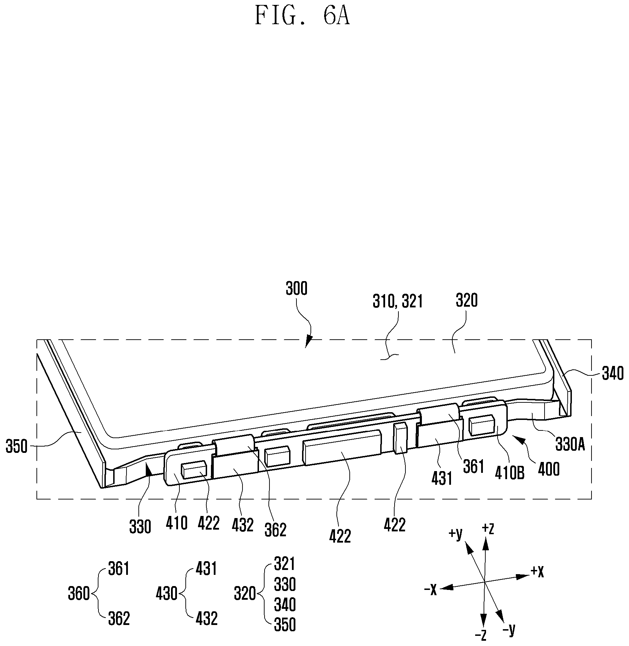

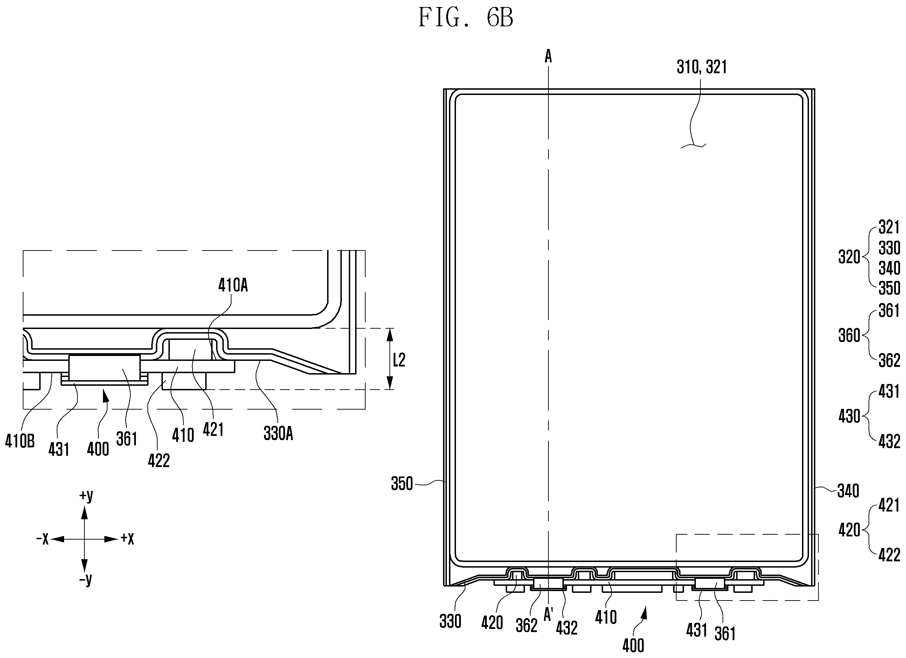

FIG. 3 is a view illustrating a battery structure in a state before being bent at a first sealing portion according to an embodiment of the disclosure. FIG. 4A is a view illustrating a battery structure in a state in which a bent shape is formed at the first sealing portion according to an embodiment of the disclosure. FIG. 4B is an enlarged view illustrating the first sealing portion of FIG. 4A. FIG. 4C is a rear perspective view illustrating the battery structure of FIG. 4A. FIG. 5A is a front view illustrating a state in which the first sealing portion of FIG. 4A is folded to face the accommodation portion of the battery pouch. FIG. 5B is an enlarged view illustrating the first sealing portion of FIG. 5A. FIG. 6A is a perspective view illustrating a state in which a protection circuit module is disposed on the first sealing portion of the battery pouch. FIG. 6B is a front view illustrating a state in which the protection circuit module is disposed on the first sealing portion of the battery pouch.

In the following description, components that are identical or similar to those described above are the same reference numerals will be using the same reference numerals.

According to an embodiment of the disclosure, a battery structure 300 (e.g., the battery 189 in FIG. 1) may include a battery cell 310, a battery pouch 320, an electrode terminal 360 including a first electrode tab 361 connected to a positive electrode plate of the battery cell 310 and a second electrode tab 362 connected to a negative electrode plate of the battery cell 310, and a protection circuit module 400 that is in close contact with a portion of the battery pouch 320 to be connected to the electrode terminal 360.

According to an embodiment, an electronic device (e.g., the electronic device 101 in FIG. 1) may include a battery structure 300 (e.g., the battery 189 of FIG. 1) that includes a battery cell 310 configured to supply power to various electronic elements included in the electronic device (e.g., a processor (e.g., the processor 120 in FIG. 1), memory (e.g., the memory 130 in FIG. 1), or a display (e.g., the display module 160 of FIG. 1)). The battery structure 300 may be, for example, a lithium-ion battery (Li-ion battery). The lithium-ion battery is a rechargeable battery that is chargeable using an external power source. The lithium-ion battery is widely used in mobile electronic devices due to the high energy density, excellent retention, and long life cycle thereof. **In** addition, a lithium ion polymer battery, which uses a solid or gel-type electrolyte, has a significantly lower risk of electrolyte leakage compared to other batteries using liquid electrolytes. The battery structure 300 may be a lithium-ion battery with high energy storage per unit volume but is not limited thereto.

According to an embodiment, the battery cell 310 may include a positive electrode plate, a negative electrode plate, and a separator. The positive electrode plate may function as a cathode during the discharge of the battery cell 310, thereby absorbing lithium ions from the electrolyte contained in the battery cell 310 to form a lithium compound, and may function as an anode during charging, thereby releasing lithium ions. The positive electrode plate may include a positive electrode current collector including a thin metal plate such as aluminum and/or a positive electrode active material. The positive electrode active material may include lithium compounds, for example, lithium cobalt oxide (LiₓCoO₂), lithium nickel oxide (LiₓNiO₂), lithium nickel cobalt oxide (Liₓ(NiCo)O₂), lithium nickel cobalt manganese oxide (Liₓ(NiCoMn)O₂), lithium nickel cobalt aluminum oxide (Liₓ(NiCoAl)O₂), spinel-type lithium manganese oxide (LiₓMn₂O₄), manganese dioxide (MnO₂), and/or olivine-type compounds such as lithium iron phosphate (LiₓFePO₄) and lithium manganese phosphate (LiₓMnPO₄). The negative electrode plate may function as an anode during the discharge of the battery cell 310, thereby releasing lithium ions into the electrolyte contained in the battery cell 310, and may function as a cathode during charging, thereby storing reduced lithium atoms. The negative electrode plate may include a negative electrode current collector including a thin metal plate such as copper and/or a negative electrode active material. The negative electrode active material may include, for example, artificial and/or natural graphite that stores lithium through intercalation, various silicon-based compounds such as silicon oxide, silicon nitride and/or silicon carbide, and lithium metal or its various alloys and metal compounds that store metallic lithium. The separator may be a member that allows lithium ions to pass therethrough while preventing electrical contact between the positive electrode and the negative electrode. In an embodiment, the separator may include a polymer material such as polyethylene or polypropylene, which has micropores of a size that allows lithium ion passage. The minimum unit of a battery including the negative electrode, the positive electrode, and the separator may be referred to as a battery cell 310 or an electrode assembly.

According to an embodiment, the battery structure 300 may include various types of batteries. In an embodiment, the battery structure 300 may include a jelly roll-type battery. The jelly roll may include a structure in which the positive electrode plate and the negative electrode plate are stacked and wound together. The positive electrode plate and the negative electrode plate may be wound together with a separator interposed therebetween. According to another embodiment, the battery structure 300 may include a stack-type electrode assembly in which the positive electrode plate, the negative electrode plate, and/or the separator are stacked. The positive electrode plate may refer to an electrode from which electrons flow out. Since a chemical reaction in which electrons are lost occurs at the positive electrode plate, the positive electrode plate may be understood as an electrode where an oxidation reaction takes place. A positive electrode active material for positive electrode activation may be coated on at least one surface of the positive electrode plate. The negative electrode plate may refer to an electrode into which electrons flow. Since a chemical reaction in which electrons are gained occurs at the negative electrode plate, the negative electrode plate may be understood as an electrode where a reduction reaction takes place. A negative electrode active material for negative electrode activation may be coated on at least one surface of the negative electrode plate. As such, a current may be generated through the redox reaction between the positive electrode plate and the negative electrode plate with the separator interposed therebetween.

According to an embodiment, the separator disposed between the positive electrode plate and the negative electrode plate may function as an electrolyte in the battery cell 310. The separator may be made of a porous polymer material. For example, the separator may be made of a porous polyolefin film, polyvinylidene fluoride-hexafluoropropylene, polyvinylidene fluoride-trichloroethylene, polymethyl methacrylate, polyacrylonitrile, polyvinylpyrrolidone, polyvinyl acetate, ethylene vinyl acetate copolymer, polyethylene oxide, cellulose acetate, cellulose acetate butyrate, cellulose acetate propionate, cyanoethyl pullulan, cyanoethyl polyvinyl alcohol, cyanoethyl cellulose, cyanoethyl sucrose, pullulan, carboxymethyl cellulose, acrylonitrile-styrene-butadiene copolymer, polyimide, polyethylene terephthalate, polybutylene terephthalate, polyester, polyacetal, polyamide, polyether ether ketone, polyether sulfone, polyphenylene oxide, polyphenylene sulfide, polyethylene naphthalate, a nonwoven fabric film, a film having a porous web structure, or a mixture thereof. Inorganic particles may be bonded to one or both surfaces of the separator.

According to an embodiment, the positive electrode plate of the battery cell 310 may be connected to the first electrode tab 361. For example, the first electrode tab 361 may be in contact with the positive electrode plate. **In** some embodiments, the first electrode tab 361 may be integrated with the positive electrode plate. The negative electrode plate of the battery cell 310 may be connected to the second electrode tab 362, which will be described later. For example, the second electrode tab 362 may be in contact with the negative electrode plate. **In** some embodiments, the second electrode tab 362 may be integrated with the negative electrode plate.

According to an embodiment, as illustrated in FIG. 3, the battery pouch 320 may seal the battery cell 310. **In** an embodiment, the battery pouch 320 may accommodate the positive electrode plate, the negative electrode plate, and the separator, and may seal the positive and negative electroplates and the separator from the external environment. For example, the battery pouch 320 may include a metal (e.g., aluminum or stainless steel), a polymer material, and/or a composite or laminate thereof. **In** an embodiment, an organic electrolyte (not illustrated) may be injected into and sealed within the battery pouch 320. For example, the organic electrolyte may include a lithium salt and an organic solvent.

**In** an embodiment, referring to FIG. 3, the battery pouch 320 may include an accommodating portion 321, in which the battery cell 310 is positioned, and sealing portions 330, 340, and 350, which are residual areas remaining after enclosing the battery cell 310. The accommodating portion 321 may be an inner space of the battery pouch 320 in which the battery cell 310 is disposed. The sealing portions 330, 340, and 350 may be areas where the remaining areas after accommodating the battery cell 310 are bonded. For example, the battery pouch 320 may seal the battery cell 310 as the sealing portions 330, 340, and 350 are bonded through heat sealing or an adhesive member. **In** an embodiment, the sealing portions 330, 340, and 350 may be formed on the left, right, and lower sides of the battery cell 310. For example, the battery pouch 320 may include a first sealing portion 330 positioned on the lower side of the battery cell 310 (e.g., in the -y direction based on FIG. 3), a second sealing portion 340 positioned on the right side of the battery cell 310 (e.g., in the +x direction based on FIG. 3, first direction), and a third sealing portion 350 positioned on the left side of the battery cell 310 (e.g., in the -x direction based on FIG. 3, second direction). In some embodiments, the sealing portions 330, 340, and 350 may be formed on the left side (e.g., in the -x direction based on FIG. 3), right side (e.g., in the +x direction based on FIG. 3), upper side (e.g., in the +y direction based on FIG. 3), and lower side (e.g., in the -y direction based on FIG. 3) of the battery cell 310. In addition, the sealing portions 330, 340, and 350 may be formed in various positions relative to the battery cell 310 depending on the size and shape of the battery cell 310.

According to an embodiment, as illustrated in FIGS. 4A, 4B, and 4C, the battery structure 300 may include a first electrode tab 361 connected to the positive electrode plate of the battery cell 310 and a second electrode tab 362 connected to the negative electrode plate. The first electrode tab 361 and the second electrode tab 362 may be drawn out to at least one of the sealing portions 330, 340, and 350. For example, the first electrode tab 361 may be connected to the positive electrode plate of the battery cell 310 and drawn out to the first sealing portion 330, and the second electrode tab 362 may be connected to the negative electrode plate of the battery cell 310 and drawn out to the first sealing portion 330. Hereinafter, it is assumed that the first electrode tab 361 and the second electrode tab 362 are drawn out to the first sealing portion 330.

According to an embodiment, the battery structure 300 may include a protection circuit module 400 (e.g., the battery protection circuit (the protection circuit module (PCM)) 240 in FIG. 2). The protection circuit module 400 may perform one or more of various functions (e.g., a pre-cutoff function) to prevent performance degradation or damage to the battery cell 310. In an embodiment, the protection circuit module 400 may protect the battery cell 310 by blocking overcharging, overdischarging, or overcurrent.

According to an embodiment, as illustrated in FIG. 6A, the protection circuit module 400 may include a printed circuit board 410, at least one electronic element 420 disposed on the printed circuit board 410, and/or a connection terminal 430 disposed on the printed circuit board 410 and connected to the electrode terminal 360. In an embodiment, the electronic element 420 may be an integrated circuit (IC) chip of the protection circuit module 400. In an embodiment, the electronic element 420 may include a first electronic element 421 and a second electronic element 422. The first electronic element 421 may be disposed on a first surface 410A of the printed circuit board 410. The second electronic element 422 may be disposed on a second surface 410B of the printed circuit board 410. In an embodiment, referring to FIG. 6B, the first surface 410A of the printed circuit board 410 may be a surface facing the first surface 330A of the first sealing portion 330. The second surface 410B of the printed circuit board 410 may be the opposite surface of the first surface 410A, and may be a surface facing a counterpart of the electronic device. The first connection terminal 431 and the second connection terminal 432 may be disposed on the second surface 410B of the printed circuit board 410. In an embodiment, the connection terminal 430 may include a first connection terminal 431 connected to the first electrode tab 361 and a second connection terminal 432 connected to the second electrode tab 362. Referring to FIGS. 6A and 6B to be described later, the first connection terminal 431 may be disposed on the second surface 410B of the printed circuit board 410 to be electrically connected to the first electrode tab 361. The second connection terminal 432 may be disposed on the second surface 410B of the printed circuit board 410 to be electrically connected to the second electrode tab 362.

In an embodiment, the protection circuit module 400 may be electrically connected to the battery cell 310. In an embodiment, the protection circuit module 400 may be disposed adjacent to the first sealing portion 330. For example, the printed circuit board 410 of the protection circuit module 400 may be disposed on and in close with a surface of the first sealing portion 330 (e.g., the first surface 330A in FIG. 5B) or the second surface (e.g., the second surface 330B in FIG. 4B). Referring to FIG. 6A, at least a section of the first electrode tab 361 of the battery cell 310 may be bent to be connected to the first connection terminal 431 of the protection circuit module 400. Likewise, at least a section of the second electrode tab 362 of the battery cell 310 may be bent to be connected to the second connection terminal 432 of the protection circuit module 400.

According to an embodiment, as electronic devices become miniaturized and slimmed, the space occupied by the battery structure 300 within the electronic device may be designed to be limited. In particular, electronic devices worn on a portion of a user's body, such as wearable electronic devices, may have size constraints considering user comfort and weight perception. Accordingly, the space occupied by the battery structure 300 within a wearable electronic device may be reduced. Meanwhile, when implementing the battery structure 300 in a limited space, the size of the battery cell 310 may be limited. In this case, the capacity of the battery structure 300 may be limited. According to an embodiment of the disclosure, the space occupied by the protection circuit module 400 and/or the sealing portions 330 and 340 within the space occupied by the battery structure 300 in the electronic device may be reduced. In this case, the size of the battery cell 310 may be increased by the reduced space, thereby securing the capacity of the battery cell 310. Hereinafter, a structure for reducing the space occupied by the protection circuit module 400 in the disclosure will be described in detail.

In an embodiment, referring to FIGS. 4A and 4B, the second sealing portion 340 and the third sealing portion 350 may be bent to face the side surface of the battery pouch 320. For example, the second sealing portion 340 and the third sealing portion 350 may be folded in the +z direction based on FIG. 4A. As will be described later, the first sealing portion 330 may also be folded in the +z direction based on FIG. 4A, along with the second sealing portion 340 and the third sealing portion 350. Accordingly, the first sealing portion 330, the second sealing portion 340, and the third sealing portion 350, which are residual portions of the battery pouch 320 remaining after sealing the battery cell 310, may occupy a reduced space within the electronic device.

According to an embodiment, as illustrated in FIGS. 4A, 4B, and 4C, the first sealing portion 330 of the battery pouch 320 may be formed in a bent shape and may include at least one groove 331. In an embodiment, when the battery pouch 320 is viewed in the +y direction based on FIG. 4B, the first sealing portion 330 may have a shape in which a " 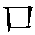 " shape, a " 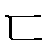 " shape, and/or a "U" shape are repeatedly formed. Alternatively, the first sealing portion 330 may include at least one of the " 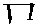 " shape, the " 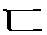 " shape, and/or the "U" shape. In an embodiment, the groove 331 of the first sealing portion 330 may be a concave space formed as a result of the bending shape of the first sealing portion 330, such as the " 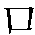 " shape, the " 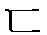 " shape, and/or the "U" shape.

In an embodiment, the first sealing portion 330 may have a shape bent by being pressed through a jig (not illustrated). Referring to FIGS. 4A, 4B, and 4C, at least one groove 331 may be formed in the area pressed by the jig. During the sealing process, the first sealing portion 330 may be pressed by placing a jig with a bent shape on the first surface 330A and the second surface 330B of the first sealing portion 330, thereby forming the groove 331 on the first surface 330A and/or the second surface 330B. In addition, the groove 331 may be formed in the first sealing portion 330 through various processes.

As will be described later, at least a portion of an electronic component disposed in the protection circuit module 400 may be positioned in the groove 331 of the first sealing portion 330. In an embodiment, at least one of the first electronic element 421, the second electronic element 422, the first connection terminal 431, or the second connection terminal 432 of the protection circuit module 400 may be disposed in the groove 331. For example, referring to FIG. 6B, the protection circuit module 400 may be in close contact with the first surface 330A of the first sealing portion 330 such that the first electronic element 421, which is disposed on the first surface 410A of the printed circuit board 410, is positioned in the groove 331 of the first sealing portion 330.

According to an embodiment, as illustrated in FIGS. 5A and 5B, the first sealing portion 330 may be processed into a bent shape in which the groove 331 is formed and then bent to face the battery cell 310. For example, the first sealing portion 330 may be folded in the +z direction based on FIG. 5B. Accordingly, the space occupied by the first sealing portion 330 in the area where the battery structure 300 is disposed within the electronic device may be reduced. Meanwhile, the first sealing portion 330 may be separated from the second sealing portion 340 and the third sealing portion 350 to allow folding.

In an embodiment, referring to FIG. 4C, the groove 331 formed in the first sealing portion 330 may be spaced apart by a predetermined distance L1 from an end of the battery pouch 320 that forms the accommodation portion 321, so that the first sealing portion 330 may be folded in the +z direction. Accordingly, the first sealing portion 330 may be bent to face the battery cell 310.

According to an embodiment, the protection circuit module 400 may be disposed on the first sealing portion 330. In an embodiment, referring to FIGS. 6A and 6B, the protection circuit module 400 may be disposed on the first surface 330A of the first sealing portion 330 in a state in which the first sealing portion 330 is folded in the +z direction based on FIG. 6A to face the side surface of the battery pouch 320. In an embodiment, referring to FIG. 6B, the protection circuit module 400 may be disposed such that the first electronic element 421 is positioned in the groove 331 formed on the first surface 330A of the first sealing portion 330. For example, the printed circuit board 410 may be disposed such that the first surface 410A, on which the first electronic element 421 is disposed, faces the first surface 330A of the first sealing portion 330. The second electronic element 422, which is disposed on the second surface 410B of the printed circuit board 410, may face a counterpart of the electronic device rather than the first sealing portion 330. In this case, the first electronic element 421 may be disposed in the groove 331 of the first sealing portion 330 to be protected from the surrounding environment. Accordingly, the first electronic element 421 may be positioned in the groove 331 of the first sealing portion 330 to be protected from external impact applied to the electronic device. In addition, in the protection circuit module 400, as the first electronic element 421 is positioned in the groove 331 of the first sealing portion 330, the space occupied by the first electronic element 421 within the electronic device may be reduced. Accordingly, the size of the battery cell 310 may be increased by the space previously occupied by the first electronic element 421, thereby securing additional capacity for the battery cell 310.

In an embodiment not illustrated in the drawings, the protection circuit module 400 may be disposed in a space defined between the first sealing portion 330 and the accommodation portion 321. In an embodiment, a groove (not illustrated) may be formed on the second surface 330B of the first sealing portion 330. The protection circuit module 400 may be disposed such that either the first electronic element 421 or the second electronic element 422 is positioned in the groove formed on the second surface 330B of the first sealing portion 330. In an embodiment, the protection circuit module 400 may be disposed such that the first electronic element 421 is positioned in the groove formed on the second surface 330B of the first sealing portion 330. For example, the printed circuit board 410 may be disposed such that the first surface 410A, on which the first electronic element 421 is disposed, faces the second surface 330B of the first sealing portion 330. In some embodiments, the protection circuit module 400 may be disposed such that the second electronic element 422 is positioned in the groove formed on the second surface 330B of the first sealing portion 330. For example, the printed circuit board 410 may be disposed such that the second surface 410B, on which the second electronic element 422 is disposed, faces the second surface 330B of the first sealing portion 330. Accordingly, the printed circuit board 410 may be positioned inside the first sealing portion 330, and the electronic elements 421 and 422 may be positioned in the groove of the first sealing portion 330, thereby being protected from external impact applied to the electronic device. As either the first electronic element 421 or the second electronic element 422 of the protection circuit module 400 is positioned in the groove of the first sealing portion 330, the space occupied by the electronic elements 421 and 422 within the electronic device may be reduced. Accordingly, the size of the battery cell 310 may be increased by the space previously occupied by the first electronic elements 421 and 421, thereby securing additional capacity for the battery cell 310.

In an embodiment not illustrated in the drawings, at least one of the first connection terminal 431 and the second connection terminal 432 may be positioned in the groove 331 formed on the first surface 330A of the first sealing portion 330. Alternatively, in some embodiments, at least one of the first connection terminal 431 and the second connection terminal 432 may be positioned in a groove formed on the second surface 330B of the first sealing portion 330. Accordingly, at least one of the first connection terminal 431 and the second connection terminal 432 may be protected from external impact applied to the electronic device. Furthermore, as either the first connection terminal 431 or the second connection terminal 432 of the protection circuit module 400 is positioned in the groove of the first sealing portion 330, the space occupied by the connection terminals 431 and 432 within the electronic device may be reduced. Accordingly, the size of the battery cell 310 may be increased by the space previously occupied by the connection terminals 431 and 432, thereby securing additional capacity for the battery cell 310.

Hereinafter, for convenience of explanation, it will be assumed that the protection circuit module 400 is disposed such that the first electronic element 421, which is disposed on the first surface 410A of the printed circuit board 410, is positioned in the groove 331 formed on the first surface 330A of the first sealing portion 330, with the first surface 330A of the first sealing portion 330 facing the first surface 310A of the first sealing portion 330.

Meanwhile, as described above, when the protection circuit module 400 is positioned in the space formed between the first sealing portion 330 and the accommodation portion 321, the groove 331 formed on the second surface 330B of the first sealing portion 330 may be additionally spaced apart from an end of the battery pouch 320 that forms the accommodation portion 321 by a predetermined distance L1 and a distance corresponding to the thickness of the printed circuit board 410 to allow the first sealing portion 330 to be folded in the +z direction of FIG. 4C.

According to an embodiment, as illustrated in FIGS. 6A and 6B, as the first electronic element 421 of the protection circuit module 400 is positioned in the groove 331 of the first sealing portion 330, the space occupied by the first electronic element 421 within the electronic device may be reduced. In an embodiment, as the first electronic element 421 is positioned in the groove 331, the length of the battery structure 300 in the y-axis direction may be reduced based on FIG. 6A. For example, when the groove 331 is not formed in the first sealing portion 330, the distance from one end of the battery pouch 320 to the end of the second electronic element 422 of the protection circuit module 400 may be about 5.7 mm. In comparison, as illustrated in FIGS. 6A and 6B, when the first electronic element 421 of the protection circuit module 400 is positioned in the groove 331 of the first sealing portion 330, the distance L2 from the one end of the battery pouch 320 that forms the accommodation portion 321 to the second electronic element 422 of the protection circuit module 400 may be reduced to about 4.2 mm. In this case, as the space occupied by the first electronic element 421 is reduced through the groove 331 of the first sealing portion 330, the size of the battery cell 310 may be increased, thereby increasing the capacity of the battery cell 310.

In an embodiment, referring to FIGS. 6A and 6B, the protection circuit module 400 may be disposed on the first surface 330A or the second surface 330B of the first sealing portion 330 to be electrically connected to the electrode terminal 360 of the battery structure 300. In an embodiment, at least a section of the first electrode tab 361 of the battery structure 300 may be bent to be connected to the first connection terminal 431 disposed on the printed circuit board 410 of the protection circuit module 400. Likewise, at least a section of the second electrode tab 362 of the battery structure 300 may be bent to be connected to the second connection terminal 432 disposed on the printed circuit board 410 of the protection circuit module 400.

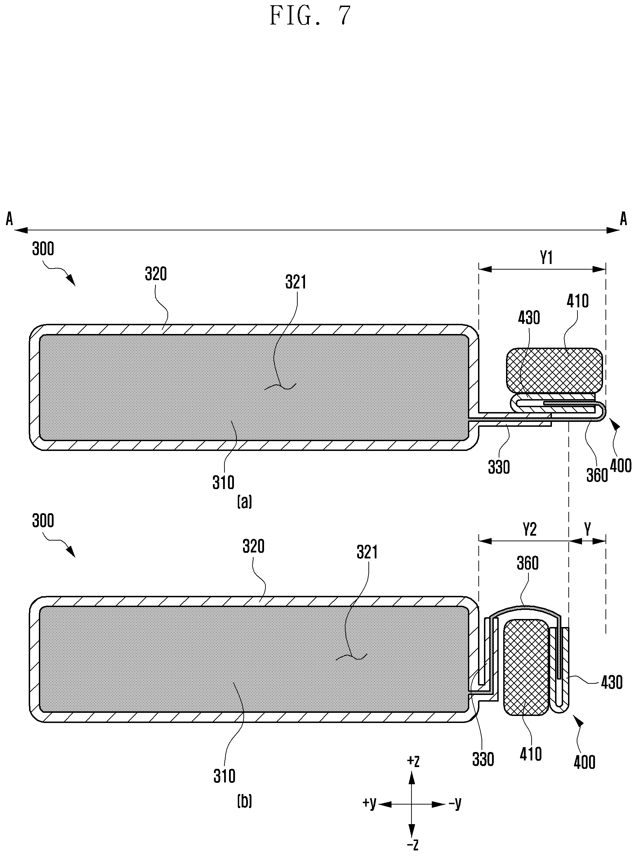

FIG. 7 is a view for comparing and describing the battery structure 300 of the disclosure with a battery structure 300 according to another embodiment.

Hereinafter, the structural differences between a state before the space occupied by the protection circuit module 400 within the space occupied by the battery cell 310 in the electronic device (e.g., the electronic device 101 in FIG. 1) is reduced (e.g., (a) of FIG. 7) and a state after the space occupied by the protection circuit module 400 is reduced (e.g., (b) of FIG. 7) will be described.

In an embodiment, referring to (a) of FIG. 7, the first sealing portion 330 may be disposed in a direction parallel to the extension direction (e.g., the y-axis direction of FIG. 7) of the battery structure 300 without being bent to face the side surface of the battery pouch 320 of the battery structure 300 (e.g., the battery 189 in FIG. 1). The protection circuit module 400 may be seated on the first sealing portion 330 to be electrically connected to the electrode terminal 360 of the battery structure 300.

Referring to (b) of FIG. 7, which illustrates an embodiment of the disclosure, the first sealing portion 330 may be processed into a bent shape in which the groove 331 is formed and may then bent to face the side surface of the battery pouch 320. For example, the first sealing portion 330 may be folded in the +z direction based on (b) of FIG. 7. In this case, compared to (a) of FIG. 7, the space occupied by the first sealing portion 330 within the electronic device may be reduced. In addition, the protection circuit module 400 may be disposed on the first surface 330A of the first sealing portion 330 to be electrically connected to the electrode terminal 360 of the battery structure 300. As the printed circuit board 410 of the protection circuit module 400 is disposed on the first sealing portion 330 such that the first electronic element 421 is positioned in the groove 331 of the first sealing portion 330, the space occupied by the first electronic element 421 may be reduced. In summary, compared to (a) of FIG. 7, in the embodiment illustrated in (b) of FIG. 7, as the first sealing portion 330 is folded to be oriented in the +z direction and the first electronic element 421 is positioned in the groove 331 of the first sealing portion 330, the space occupied by the protection circuit module 400 within the electronic device may be reduced by Y in FIG. 7.

In an embodiment, the space Y corresponding to the difference between the space Y1 from one end of the battery pouch 320 to the end of the protection circuit module 400 in (a) of FIG. 7 and the space Y2 from one end of the battery pouch 320 to the end of the protection circuit module 400 in (b) of FIG. 7 may be secured. Accordingly, the size of the battery cell 310 may be increased by the reduced space Y, thereby securing the capacity of the battery cell 310. In an embodiment, compared to the battery structure 300 illustrated in FIG. 7A, the battery structure 300 illustrated in (b) of FIG. 7 may secure about 5% to 8% additional capacity for the battery cell 310. The above description may also be applicable to the case where the protection circuit module 400 is positioned in the space formed between the accommodation portion 321 and the first sealing portion 330 to be disposed on the second surface 330B of the first sealing portion 330.

Meanwhile, in the case of a wearable electronic device, its size may be smaller compared to a portable electronic device (e.g., a smartphone or a laptop). Similarly, the battery structure 300 disposed within a wearable electronic device may be relatively smaller than a battery structure 300 used in electronic devices such as smartphones and laptops. When the battery structure 300 has a small size, such as in a wearable electronic device, even a partial reduction in the space occupied by the first sealing portion 330 and the protection circuit module 400 may result in a relatively high proportion of additional secured space for the increase of the battery cell 310 within the overall size of the battery structure 300.

Although the above description assumes that the battery structure 300 is used in a wearable electronic device, the disclosure may not be limited thereto. For example, the battery structure 300 of the disclosure may be applied to various types of electronic devices such as laptops, smartphones, or tablet PCs.

According to an embodiment of the disclosure, an electronic device 101 may include a battery cell 310, a battery pouch 320 sealing the battery cell, the battery pouch including an accommodation portion 321 in which the battery cell is disposed and a first sealing portion 330 that is bent to face the battery cell and includes at least one groove 331, an electrode terminal 360 including a first electrode tab 361 connected to a positive electrode plate of the battery cell and drawn out to the first sealing portion and a second electrode tab 362 connected to a negative electrode plate of the battery cell and drawn out to the first sealing portion, and a protection circuit module 400 (e.g., the battery protection circuit 240) including at least one electronic element 420 and disposed on the first sealing portion such that the electronic element is positioned in the groove of the first sealing portion, the protection circuit module being connected to the electrode terminal.

The protection circuit module may include a printed circuit board 410 on which the electronic element is disposed, and a connection terminal 430 disposed on the printed circuit board. The connection terminal may include a first connection terminal 431 connected to the first electrode tab and a second connection terminal 432 connected to the second electrode tab.

The printed circuit board may be disposed on a first surface 330A of the first sealing portion, such that the electronic element is positioned in the groove of the first sealing portion.

The printed circuit board may be positioned in a space defined between the first sealing portion and the accommodation portion, and may be disposed on a second surface 330B of the first sealing portion, such that the electronic element is positioned in the groove of the first sealing portion.

The battery pouch may include a second sealing portion 340 that is positioned in a first direction with respect to the battery cell (e.g., the +x direction based on FIG. 3) and is bent to face the battery cell, and a third sealing portion (350) that is positioned in a second direction with respect to the battery cell (e.g., the -X direction with based on FIG. 3) and is bent to face the battery cell.

The first sealing portion, the second sealing portion, and the third sealing portion may be bent in the same direction.

The groove of the first sealing portion may have a size including the electronic element of the protection circuit module.

A section of the first electrode tab of the electrode terminal may be bent so as to be connected to the first connection terminal of the printed circuit board, and a section of the second electrode tab of the electrode terminal may be bent so as to be connected to the second connection terminal of the printed circuit board.

The groove of the first sealing portion may be formed at a predetermined distance L1 from an end of the battery pouch that defines the accommodation portion, such that the first sealing portion is bendable with respect to the battery cell.

In addition, the battery cell may be a lithium battery.

According to an embodiment of the disclosure, a battery structure 300 (e.g., the battery cell 189) may include a battery cell 310, a battery pouch 320 sealing the battery cell, the battery pouch including an accommodation portion 321 in which the battery cell is disposed and a first sealing portion 330 that is bent to face the battery cell and includes at least one groove 331, an electrode terminal 360 including a first electrode tab 361 connected to a positive electrode plate of the battery cell and drawn out to the first sealing portion and a second electrode tab 362 connected to a negative electrode plate of the battery cell and drawn out to the first sealing portion, and a protection circuit module 400 (e.g., the battery protection circuit 240) including at least one electronic element 420 and disposed on the first sealing portion such that the electronic element is positioned in the groove of the first sealing portion, the protection circuit module being connected to the electrode terminal.

The protection circuit module may include a printed circuit board 410 on which the electronic element is disposed, and a connection terminal 430 disposed on the printed circuit board. The connection terminal may include a first connection terminal 431 connected to the first electrode tab and a second connection terminal 432 connected to the second electrode tab.

The printed circuit board may be disposed on a first surface 330A of the first sealing portion, such that the electronic element is positioned in the groove of the first sealing portion.

The printed circuit board may be positioned in a space defined between the first sealing portion and the accommodation portion, and may be disposed on a second surface 330B of the first sealing portion, such that the electronic element is positioned in the groove of the first sealing portion.

The battery pouch may include a second sealing portion 340 that is positioned in a first direction with respect to the battery cell (e.g., the +x direction based on FIG. 3) and is bent to face the battery cell, and a third sealing portion (350) that is positioned in a second direction with respect to the battery cell (e.g., the -x direction based on FIG. 3) and is bent to face the battery cell.

The first sealing portion, the second sealing portion, and the third sealing portion may be bent in the same direction.

The groove of the first sealing portion may have a size including the electronic element of the protection circuit module.

A section of the first electrode tab of the electrode terminal may be bent so as to be connected to the first connection terminal of the printed circuit board, and a section of the second electrode tab of the electrode terminal may be bent so as to be connected to the second connection terminal of the printed circuit board.

The groove of the first sealing portion may be formed at a predetermined distance L1 from an end of the battery pouch that defines the accommodation portion, such that the first sealing portion is bendable with respect to the battery cell.

In addition, the battery cell may be a lithium battery.

According to an embodiment of the disclosure, a space between components constituting the battery structure 300 may be reduced. In this case, the capacity of the battery cell 310 may be increased by expanding the size of the battery cell 310 in proportion to the reduced space between the components. For example, the space occupied by the battery cell 310 protection circuit module 400 in a battery cell 310 disposition space may be reduced, and the size of the battery cell 310 may be increased by the reduced space.

## Claims

1. An electronic device (101) comprising:
a battery cell (310);
a battery pouch (320) sealing the battery cell, the battery pouch comprising an accommodation portion (321) in which the battery cell is disposed and a first sealing portion (330) that is bent to face the battery cell and comprises at least one groove (331);
an electrode terminal (360) comprising a first electrode tab (361) connected to a positive electrode plate of the battery cell and drawn out to the first sealing portion and a second electrode tab (362) connected to a negative electrode plate of the battery cell and drawn out to the first sealing portion; and
a protection circuit module (400) comprising at least one electronic element (420) and disposed on the first sealing portion such that the electronic element is positioned in the groove of the first sealing portion, the protection circuit module being connected to the electrode terminal.

2. The electronic device of claim 1, wherein the protection circuit module comprises:
a printed circuit board (410) on which the electronic element is disposed; and
a connection terminal (430) disposed on the printed circuit board, the connection terminal comprising a first connection terminal (431) connected to the first electrode tab and a second connection terminal (432) connected to the second electrode tab.

3. The electronic device of claim 2, wherein the printed circuit board is disposed on a first surface (330A) of the first sealing portion such that the electronic element is positioned in the groove of the first sealing portion.

4. The electronic device of claim 2, wherein the printed circuit board is positioned in a space defined between the first sealing portion and the accommodation portion, and is disposed on a second surface (330B) of the first sealing portion, such that the electronic element is positioned in the groove of the first sealing portion.

5. The electronic device of claim 1, wherein the battery pouch comprises a second sealing portion (340) that is positioned in a first direction with respect to the battery cell and is bent to face the battery cell, and a third sealing portion (350) that is positioned in a second direction with respect to the battery cell and is bent to face the battery cell.

6. The electronic device of claim 5, wherein the first sealing portion, the second sealing portion, and the third sealing portion are bent in a same direction.

7. The electronic device of claim 1, wherein the groove of the first sealing portion has a size comprising the electronic element of the protection circuit module.

8. The electronic device of claim 2, wherein a section of the first electrode tab of the electrode terminal is bent so as to be connected to the first connection terminal of the printed circuit board, and
wherein a section of the second electrode tab of the electrode terminal is bent so as to be connected to the second connection terminal of the printed circuit board.

9. The electronic device of claim 1, wherein the groove of the first sealing portion is formed at a predetermined distance (L1) from an end of the battery pouch that defines the accommodation portion, such that the first sealing portion is bendable with respect to the battery cell.

10. A battery structure (189, 300) comprising:
a battery cell (310);
a battery pouch (320) sealing the battery cell, the battery pouch comprising an accommodation portion (321) in which the battery cell is disposed and a first sealing portion (330) that is bent to face the battery cell and comprises at least one groove (331);
an electrode terminal (360) comprising a first electrode tab (361) connected to a positive electrode plate of the battery cell and drawn out to the first sealing portion and a second electrode tab (362) connected to a negative electrode plate of the battery cell and drawn out to the first sealing portion; and
a protection circuit module (400) comprising at least one electronic element (420) and disposed on the first sealing portion such that the electronic element is positioned in the groove of the first sealing portion, the protection circuit module being connected to the electrode terminal.

11. The battery structure according to claim 10, wherein the protection circuit module comprises:
a printed circuit board (410) on which the electronic element is disposed; and
a connection terminal (430) disposed on the printed circuit board, the connection terminal comprising a first connection terminal (431) connected to the first electrode tab and a second connection terminal (432) connected to the second electrode tab.

12. The battery structure according to claim 11, wherein the printed circuit board is disposed on a first surface (330A) of the first sealing portion, such that the electronic element is positioned in the groove of the first sealing portion.

13. The battery structure according to claim 11, wherein the printed circuit board is positioned in a space defined between the first sealing portion and the accommodation portion, and is disposed on a second surface (330B) of the first sealing portion, such that the electronic element is positioned in the groove of the first sealing portion.

14. The battery structure according to claim 10, wherein the battery pouch comprises a second sealing portion (340) that is positioned in a first direction with respect to the battery cell and is bent to face the battery cell, and a third sealing portion (350) that is positioned in a second direction with respect to the battery cell and is bent to face the battery cell.

15. The battery structure according to claim 10, wherein the groove of the first sealing portion has a size comprising the electronic element of the protection circuit module.
